# EUROPÄISCHE PATENTANMELDUNG

(11) **EP 0 967 001 A2**
(43) Veröffentlichungstag der Anmeldung: **29.12.1999**
(21) Anmeldenummer: 99109323.8
(22) Anmeldetag: 28.05.1999
(51) Int. Cl.: B01D 53/00, F23G 7/06

(54) **Thermische Entsorgung von Gasen und Dämpfen aus Reinigungsanlagen**

(30) Priorität: 28.05.1998 DE 19823899
(71) Anmelder: BASF AKTIENGESELLSCHAFT, 67056 Ludwigshafen (DE)
(72) Erfinder: Mattmann, Wolfgang, Dr., 67117 Limburgerhof (DE); König, Josef, 67308 Zellertal (DE); Jones, Simon A., Dr., 69181 St. Ilgen (DE); Edinger, Christine, 67150 Niederkirchen (DE); Edinger, Michael, 67259 Grossniedesheim (DE); Hemmer, Gerd, 67459 Böhl-Iggelheim (DE)
(74) Vertreter: Isenbruck, Günter, Dr.

(57) **Zusammenfassung**

Die Erfindung betrifft ein Verfahren zur Entsorgung von Gasen und/oder Dämpfen aus Reinigungsanlagen, die mit Wasser (1) und gegebenenfalls einem üblichen und an sich bekannten Reinigungsmittel betrieben werden. Dabei werden die u.a. wasserdampfhaltigen Gase und/oder Dämpfe abgesaugt (III), nach dem Abscheiden einer flüssigen Phase (IV) verbrannt (V) und an die Atmosphäre abgegeben (VIII).

Das Verfahren eignet sich insbesondere für Silo-, Tank- und/oder Großbehälterreinigungsanlagen, bevorzugt für Tankzug-, Eisenbahnkesselwagen- und Containerreinigungsanlagen.

## Beschreibung

Die Erfindung betrifft ein Verfahren zur Entsorgung von Gasen und/oder Dämpfen aus Reinigungsanlagen sowie erfindungsgemäße Verwendungen des Verfahrens.

Im Stand der Technik ist es bekannt, in Silo-, Tank- und Containerreinigungsanlagen, z.B. für Eisenbahnkesselwagen oder Tankzüge eine Naßreinigung durchzuführen. Die bereits vorhandenen und entstehenden Gase werden vor Beginn und während der Reinigung durch Adsorption in Aktivkohlefiltern abgetrennt. Dieses herkömmliche Verfahren weist einige Nachteile auf. So kann die Beladungsgrenze der verwendeten Aktivkohlefilter überschritten werden. Außerdem ist bei der Regeneration der Aktivkohle ein hoher Dampfverbrauch erforderlich und auch die anschließende Entsorgung des Desorbates als Sondermüll ist problematisch. Es können zusätzlich störende Reaktionen, wie Zersetzungs- oder Polymerisationsreaktionen der Adsorbentien mit der Aktivkohle oder in den Aktivkohlefiltern stattfinden.

Als weiterer Stand der Technik ist aus dem Bereich der Entsorgung von Gas- und Dampfresten aus unterirdischen Brennstofftanks durch die DE-A-17 82 549 bekannt, die noch in den Tanks verbliebenen brennbaren Gasreste abzusaugen und zu verbrennen. Bei dieser Entfernung der brennbaren Gasreste aus den Brennstofftanks erfolgt keine Reinigung der Tanks. Die zu entfernenden Gasreste enthalten daher auch kein Wasser oder Wasserdampf.

Durch die JP-A-59 123 515 ist auch ein Verfahren zur Entsorgung von Haushaltsabwassergasen und -dämpfen bekannt, bei dem eine aufwendige Vorreinigung mittels einer Eisenoxidpulverschicht und einer chemisch aktiven Adsorberschicht erfolgt, und anschließend die so vorgereinigten Gase und Dämpfe unter Verwendung von Erdgas verbrannt werden.

Die SU-A-11 14 856 betrifft eine Hochtemperaturabgasentsorgung im Temperaturbereich von 500 bis 550°C, wobei die Oxidation an zwei Katalysatorschichten erfolgt, einer Al-Cu-Cr-Schicht und einer Al-Pt-Schicht.

Die DE-A-40 26 800 offenbart ein Verfahren zur Entsorgung von organischen Dämpfen, bei denen es sich insbesondere um Lösungsmitteldämpfe handelt, mittels eines Ionisationsverfahrens im elektromagnetischen Feld.

Ausgehend von diesem Stand der Technik lag der Erfindung daher die Aufgabe zugrunde, die bei Reinigungsanlagen anfallenden Gase und/oder Dämpfe unter Einhaltung der gesetzlichen Grenzwertbestimmungen zu entsorgen.

Die Aufgabe wird erfindungsgemäß durch ein Verfahren gelöst, bei dem die in den mit Wasser und gegebenenfalls einem Reinigungsmittel betriebenen Reinigungsanlagen anfallenden und unter anderem wasserdampfhaltigen Gase und/oder Dämpfe abgesaugt, nach dem Abscheiden einer flüssigen Phase verbrannt und an die Atmosphäre abgegeben werden. Dadurch kann auf die Verwendung von Aktivkohlefiltern ganz verzichtet werden.

In einer bevorzugten Ausführungsform des erfindungsgemäßen Verfahrens können die Gase nach ihrer Verbrennung durch einen Wäscher geleitet und mittels einer alkalischen Wäsche nachgereinigt werden. Dies hat den Vorteil, daß bei der Verbrennung entstehende Gase mit umweitschädigenden oder in sonstiger Weise negativen Wirkungen, wie z.B. Cl-haltige Verbindungen, entfernt werden können.

Gemäß einer weiteren bevorzugten Ausführungsform des erfindungsgemäßen Verfahrens kann im Anschluß an die Verbrennung eine Wärmerückgewinnung erfolgen, so daß das Verfahren insgesamt sehr kostengünstig betrieben werden kann. Vorzugsweise wird diese Wärmerückgewinnung vor der alkalischen Wäsche durchgeführt. Nach dem Passieren des Wischers können die Gase über einen Kamin direkt in die Atmosphäre geleitet werden. Es hat sich gezeigt, daß die gesetzlichen Auflagen in Bezug auf Schadstoffgrenzwerte eingehalten werden.

Die Erfindung betrifft auch die Verwendung des erfindungsgemäßen Verfahrens für Silo-, Tank- und/oder Großbehälterreinigungsanlagen. In diesem Zusammenhang sind insbesondere Eisenbahnkesselwagen und Tankzüge zu nennen. Unter Großbehälterreinigungsanlagen werden beispielsweise Containerreingungsanlagen verstanden.

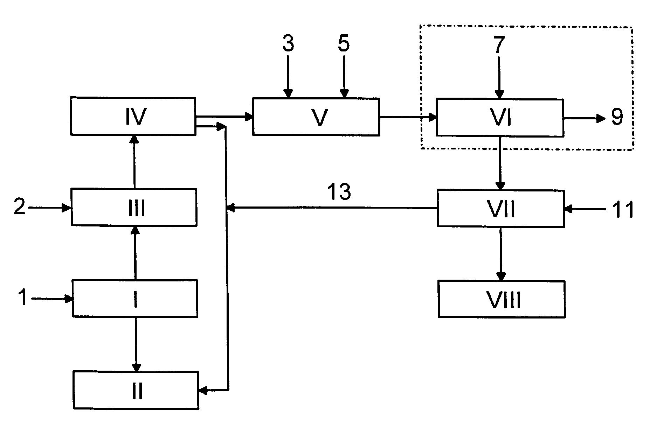

Im folgenden soll die Erfindung anhand eines Ausführungsbeispieles näher erläutert werden. Dabei zeigt
- die einzige Figur: ein Schema des erfindungsgemäßen Entsorgungsverfahrens in Form eines Blockdiagramms.

Wie das schematische Blockdiagramm der einzigen Figur zeigt, wird über Leitung 1 Wasser unter erhöhtem Druck und gegebenenfalls unter Zusatz eines an sich üblichen und bekannten Reinigungsmittels in einen Kesselwagen I eingebracht. Nach der Reinigung werden vorhandene Reinigungsflüssigkeiten einer Entsorgung II zugeführt. Dampfförmig vorliegende Komponenten werden über ein Vakuumorgan in Form einer Wasserringpumpe III oder ein Gebläse aus dem Kesselwagen 1 abgesaugt. Die Wasserringpumpe III wird über Leitung 2 mit Wasser versorgt. Ein Flüssigkeitsabscheider IV trennt nochmals sich eventuell bildende Flüssigkeitstropfen, in der Regel Wassertropfen, die sich aus der Wasserdampfphase gebildet haben, ab und führt sie ebenfalls der Kläranlage zu. Die dampfförmige Phase selbst wird der Verbrennung in einer Brennkammer V zugeführt. Die Temperatur in der Brennkammer V beträgt in etwa 800-1200°C. Ein Gebläse kann der Brennkammer wahlweise Luft über Leitung 3 zuführen, wenn die wasserdampfhaltigen Gase und/oder Dämpfe bzw. Gas- und/oder Dampfmischungen einen hohen organischen Kohlenstoffanteil aufweisen. Der in Bezug aufdie Brennkammer V verwendete Brenner wird mit Erdgas betrieben, das über Leitung 5 zugeführt wird.

Im Anschluß an die Verbrennung passieren die Gase einen Wärmetauscher VI, der eine Zuleitung 7 und eine Leitung 9 zum Abführen des bei der Wärmerückgewinnung eingesetzten Wärmeträgers aufweist. Anschließend passieren die Gase einen Wäscher VII, in dem sie mittels einer alkalischen Wäsche gereinigt werden. Hierfür wird über eine Zuführung 11 wäßrige Natronlauge in den Wäscher eingebracht. Durch diesen Waschvorgang können die Gase nochmals von umweltschädigenden Verbindungen, wie z.B. Cl-haltigen Verbindungen, gereinigt werden.

Nach dem Passieren des Wäschers VII werden die so behandelten und nachgereinigten Abgase über einen Kamin VIII an die Atmosphäre abgegeben. Eine Überprüfung der Schadstoffwerte hat ergeben, daß die gesetzlich vorgeschriebenen Grenzwerte problemlos eingehalten werden. Die Waschflüssigkeit des Wäschers VII wird über Leitung 13 ebenfalls der Kläranlage II zugeführt.

Eine vereinfachte Ausführungsform der vorliegenden Erfindung sieht vor, daß die aus der Brennkammer V ausströmenden Gase direkt dem Wäscher VII zugeführt werden, ohne eine Wärmerückgewinnung über den Wärmetauscher VI durchzuführen. Um dies in der einzigen Figur kenntlich zu machen, wurde der Bereich, der den Wärmetauscher VI betrifft, mit einer strichpunktierten Umrahmung versehen.

Je nach Art der zu entsorgenden Gase und/oder Dämpfe sieht eine noch weiter vereinfachte Ausführungsform vor, von der alkalischen Wäsche abzusehen und die aus der Brennkammer ausströmenden Gase direkt an die Atmosphäre abzugeben. Gegebenenfalls wird noch eine Wärmerückgewinnung durchgeführt und das aus der Brennkammer V ausströmende Gas einem Wärmetauscher VI zugeführt, bevor die Gase über den Kamin VIII an die Atmosphäre abgegeben werden.

## Patentansprüche

1. Verfahren zur Entsorgung von Gasen und/oder Dämpfen aus mit Wasser und gegebenenfalls Reinigungsmittel betriebenen Reinigungsanlagen, bei dem die Gase und/oder Dämpfe abgesaugt, nach dem Abscheiden einer flüssigen Phase verbrannt und an die Atmosphäre abgegeben werden.

2. Verfahren nach Anspruch 1, dadurch gekennzeichnet, daß die Gase nach ihrer Verbrennung mittels einer alkalischen Wäsche nachgereinigt werden.

3. Verfahren nach Anspruch 1 oder 2, dadurch gekennzeichnet, daß im Anschluß an die Verbrennung eine Wärmerückgewinnung erfolgt.

4. Verwendung des Verfahrens gemäß einem der Ansprüche 1 bis 3 für Silo-, Tank- und/oder Großbehälterreinigungsanlagen.

5. Verwendung nach Anspruch 4 für Eisenbahnkesselwagen.

6. Verwendung nach Anspruch 4 für Tankzüge.
